# EUROPEAN PATENT SPECIFICATION

(11) **EP 1 835 813 B1**
(45) Date of publication and mention of the grant of the patent: **04.06.2008**
(21) Application number: 05820438.9
(22) Date of filing: 15.12.2005
(51) Int. Cl.: A23F 3/18

(54) **COLD WATER SOLUBLE TEA EXTRACT**
KALTWASSERLÖSLICHER TEEEXTRAKT
EXTRAIT DE THE SOLUBLE DANS L'EAU FROIDE

(30) Priority: 19.01.2005 EP 05250266
(43) Date of publication of application: 26.09.2007
(73) Proprietor: UNILEVER PLC, London, Greater London EC4P 4BQ (GB); UNILEVER N.V., 3013 AL Rotterdam (NL)
(72) Inventor: PIERRE, Francois-Xavier H., Unilever R&D Colworth, Bedford Bedfordshire MK44 1LQ (GB)
(74) Representative: Hugot, Alain
(86) International application number: PCT/EP2005/013540
(87) International publication number: WO 2006/076953

(56) References cited:
- EP-A- 0 198 209
- EP-A- 0 391 468
- EP-A- 0 699 393
- GB-A- 2 057 849

## Description

The present invention relates to a process for making a concentrated cold water soluble tea product from which one can make a tea beverage with good clarity and colour.

### BACKGROUND AND PRIOR ART

Black leaf tea is traditionally produced by oxidising and drying freshly plucked green tea leaves. Such tea is usually infused in hot water, the spent tea leaves are then removed and a hot beverage, to which other ingredients may be added, is consumed in most countries.

When hot aqueous infusions of black leaf tea are prepared, it is found that the infusion comprises substances that are soluble in hot water but insoluble in cold water, which substances therefore tend to precipitate as the infusion cools. These cold water insoluble substances comprise polyphenol-protein-caffeine complexes (known as tea "cream"), and typically comprise 20-40% of the total tea solids present in the infusion. Further, numerous compounds in the leaves, that give the beverage its unique organoleptic properties, are only sparingly soluble in cold water.

However, it is desirable to have concentrated cold water soluble tea products from which one can make tea based beverages with good organoleptic properties as these are very popular due to the convenience of use. They can also be used to prepare iced tea drinks that are very popular in some countries. The concentrated cold water soluble tea products may be liquid or they may be dried to give powders.

Several processes have been proposed to obtain cold water soluble or 'instant' tea. The most common process, as disclosed in United States patent specification US 3,163,539 (Standard Brands Inc), involves extraction from black tea leaves, alkali treatment to solubilise the tea solids, and centrifugation to remove any remaining cold-insoluble tea solids. Such powders when dissolved in water have good colour and clarity.

However, the alkali process makes use of undesirable added chemicals and significantly reduces the level of flavonoid antioxidants. There has therefore been an effort in the industry to replace the alkali process. However, such alternatives either involve addition of a chemical entity or give a low yield of beneficial tea solids.

EP 198 209 A discloses a process of concentrating and cooling a tea extract to a temperature of from 5 to 15°C in order to produce a cold-water insoluble cream (dark) and a cold-water soluble decreamed (light) phase. The cream phase is separated and then solubilised in warm water to form a second cream phase and a second decreamed phase. The two decreamed phases are mixed and dried to provide a cold-water soluble tea powder. The second cream phase is discarded. Only the cold-water soluble ingredients which co-precipitate in the first separation are extracted in the second extraction. Thus this second step only improves the yield marginally.

US 4,639,375 (Procter & Gamble) discloses treating black tea with tannase, together with other cell-wall digesting enzymes, to generate cold-water soluble instant tea powders.

EP 391 468 (Unilever) discloses a process for preparing a cold water soluble tea powder which involves the tannase process but with further treatment of the extract by ultrafiltration. This further reduced the haze of the extract but still requires the use of tannase.

EP 464 919 (Unilever) teaches that the separation of a tea extract into a cream (dark) and a decreamed (light) phase at a temperature of below 5°C, followed by subsequent removal of the creamed phase results in a cold water soluble tea extract. However, even at this low temperature, it has been found that the cream phase contains a high amount of beneficial natural tea ingredients which are lost by this process.

EP 699 393 A (Nestle) discloses an improved process of EP 198 209 A, wherein the cream is solubilised not only in water but also with the spent tea leaves from the first extraction or green tea leaves obtained separately. Thus, in the second extraction, some additional tea solids are extracted as well as the coprecipitated cold-water soluble ingredients, resulting in an improved yield. However, the yield remains low.

WO02/100184 (Unilever) suggests mixing an extract of tea material with an anionic colloidal material while making a concentrated cold water soluble tea product.

Therefore it is an aim of the present invention to provide a process for making a cold water soluble tea extract which has good colour with low or no haze, does not depend on the addition of any chemicals and has acceptable yield.

The present inventors have found that a process whereby a concentrated tea extract is separated into a cream fraction and a decreamed fraction, wherein the creamed fraction is separately solubilised in water and passed through an ultrafiltration step solves the above stated technical problem.

Thus, the present invention provides a process for making a cold water soluble tea product comprising the steps of extracting tea material with water to give a tea extract, deleafing the tea extract, concentrating the deleafed tea extract, cooling the extract, decreaming the concentrated tea extract to provide a cream fraction and a decreamed fraction, solubilising the cream fraction in water at a temperature of from 40 to 100°C and then subjecting the solubilised cream fraction to an ultrafiltration step so as to produce a permeate and a retentate and recovering the permeate.

Thus the present process does not require the addition of any chemical not obtained from tea.

The present invention also provides cold water soluble tea products obtained and/or obtainable by the process of the invention.

### DETAILED DESCRIPTION OF THE INVENTION

"Tea" for the purpose of this invention means leaf material obtained from the tea plants such as *Camellia sinensis var. sinensis* or *Camellia sinensis var. assamica*. It also includes rooibos tea obtained from *Aspalathus linearis*, however, this is a poor source of endogenous fermenting enzymes. The term 'tea' also encompasses the product of blending two or more of these teas.

"Tea material" is intended to mean vegetable material obtained from the tea plant. It could be freshly plucked tea leaves, dried tea be that black, oolong or green tea, low grade leaf tea, or mixtures thereof.

"Cold water soluble" is intended to mean substantially in cold water i.e. water having a temperature of about 4°C.

"Tea beverage" is intended to mean a beverage containing tea which is in a form suitable for ingestion by the consumer

All parts herein are by weight unless otherwise specified.

For the avoidance of doubt the word "comprising" is intended to mean including but not necessarily "consisting of" or "composed of". In other words the listed steps or options need not be exhaustive.

### The treated extract

The concentrated cold water soluble tea products may be a liquid which can be diluted to give a tea beverage with good clarity and colour. Alternatively the concentrated cold water soluble tea products can be dried to give a cold water soluble instant tea or a cold water soluble ready to drink tea powder from which one can make a tea beverage with good clarity and colour.

### Extraction

Tea material is extracted in hot water. The tea material is preferably freshly manufactured leaf tea. However one can obtain a good quality concentrated cold water soluble tea product using even a low grade made tea such as broken mixed fannings of black tea. The tea material is preferably extracted in water having a temperature of 60 to 100°C, more especially around 90°C for at least 5 minutes. This can be suitably carried out in a steam jacketed vessel with agitation.

### Deleafing

After extraction, the tea extract is de-leafed i.e. extraneous leaf material such as stalk is removed. This can be carried out using a screw press and then passing the hot liquor through a centrifuge to remove fines.

### Concentration

The deleafed tea extract tends to contain 2 to 4% soluble tea solids. As a practical matter it is best to concentrate the deleafed extract to a solids content of 8 to 20% (concentrated tea extract). This significantly lowers the volume of liquid that needs to be processed. Any suitable known means or process can be used for that purpose for example a falling film scraped surface heat exchanger.

### Separation

At this stage the extract must be at a low temperature (i.e. less than 35°C, more preferably below 31°C, and optimally below 15°C) in order that the cold-water insoluble species precipitate out and cause haze. If the temperature is too low, however, the final yield of decreamed fraction is low. Therefore it is also preferred that the extract is separated at a temperature above 1°C, more preferably above 5°C.

Preferably the low temperature concentrated extract is then centrifuged to separate out the precipitate into a cream fraction and a decreamed fraction. The decreamed fraction of the liquid is cold-water soluble and presents low haze. This is physically separated from the cream.

Alternatively, separation of the cream and decream phases may be achieved by (i) freezing the extract at below -5°C at a rate of 0.5 to 5°C per minute, or (ii) chilling the extract to below 5°C for at least 5 hours.

### Redissolution

The cream fraction is then redissolved in water, preferably at a temperature of from 40 to 100°C. Preferably this is water at a temperature near to boiling. The amount and temperature of the water should be sufficient to ensure that all of the cream solubilises, giving a liquor free of haze. It is best to solubilise the cream to a solids content of from 1 to 15 wt%.

### Ultrafiltration

The solubilised cream fraction is then fed to an ultrafiltration step. The solubilised cream is preferably at a temperature of from 40 to 100°C. The permeate from this stage is then found to be free of haze upon cooling to room temperature. This permeate may then be recombined with the decreamed fraction before or after drying/concentration. Alternatively, because of its differing chemical content, it may be set aside for selective dosing in certain specialised products.

Optionally the retentate can be further resolubilised and passed through a filtration step to produce a second permeate, which is recovered.

Preferably the ultrafiltration step uses a filter having an average molecular weight exclusion point of at least 5000 Daltons, more preferably at least 20000 Daltons, even more preferably at least 50000 Daltons. Preferably the exclusion point is not too high, otherwise large, visible particles may permeate the filter. Thus it is preferred that the filter has an average molecular weight exclusion point of less than 500000 Daltons, more preferably less than 300000 and most preferably less than 200000 Daltons.

### EXAMPLES

### Example 1

2.4kg of a pre-made hot-water soluble tea extract was obtained having a tea solids content of 10 wt%. This was centrifuged at 30°C to provide 2.17kg of a light transparent fraction on the surface and 0.23 kg of a dark cream fraction below. The cream fraction was separated from the light fraction by physically removing it. The resultant cream fraction was then solubilised in 2.71 kg of boiling water. This gave 2.94 kg of a solution having about 2.54 wt% tea solids. The solubilised cream was passed through an ultrafiltration membrane at a temperature of 45°C. The ultrafilter had a rating of 100 kDaltons. 2.6 kg of permeate was obtained which had good colour, and had very low haze when cooled to room temperature.

The permeate was mixed with the light decreamed fraction in a ratio of 15:85 by dry weight. The mix had good colour, low haze and had good levels of polyphenols, theaflavins, caffeine and catechins.

The chemical nature of various streams was analysed by HPLC for theaflavins, catechins and caffeine. For total polyphenols, the Folin-Ciocalteu method was used.

### Total Polyphenols

Total polyphenols includes the following ingredient types: thearubigins, theaflavins, catechins, gallic acid, theogallin, chlorogenic acids.

Measurements are in mg/g of freeze dried powder.

| **Sample** | **TPPs** |
|---|---|
| Standard hot extract | 254 |
| Light Decream | 212 |
| Cream/Retentate | 426 |
| Cream/Permeate | 370 |
| MIX85/15* | 237 |

| | |
|---|---|
| * 15:85 mixture of permeate with light decreamed fraction as described above. | |

The standard hot extract is obtained from hot extraction of low grade tea, deleafing and hot polishing the obtained brew, concentrating and spray-drying it.

### Total Theaflavins

Measurements are in mg/g of freeze dried powder.

Theaflavin, Theaflavin-3-monogallate, theaflavin-3'-monogallate, theaflavin digallate.

| **Sample** | **TF** | **TF3MG** | **TF3'MG** | **TFDG** | **Total** |
|---|---|---|---|---|---|
| | | | | | **TFs** |
| Standard hot extract | 0.89 | 1.57 | 0.66 | 1.26 | 4.39 |
| Light Decream | 1.32 | 1.07 | 0.46 | 0.61 | 3.45 |
| Cream/Retentate | 2.03 | 3.31 | 1.51 | 2.74 | 9.59 |
| Cream/Permeate | 2.76 | 2.83 | 1.43 | 2.15 | 9.16 |
| MIX85/15 | 1.54 | 1.31 | 0.73 | 0.79 | 4.36 |

### Total Catechins

Measurements are in mg/g of freeze dried powder.

| **Sample** | **EGC** | **Caff** | **EC** | **EGCG** | **ECG** | **Total** |
|---|---|---|---|---|---|---|
| Standard hot extract | 3.52 | 51.21 | 1.87 | 5.40 | 4.93 | 15.72 |
| Light Decream | 8.08 | 42.29 | 2.53 | 3.70 | 2.99 | 17.30 |
| Cream/Retentate | 2.99 | 46.49 | 1.00 | 1.91 | 2.19 | 8.10 |
| Cream/Permeate | 6.63 | 95.16 | 2.62 | 9.48 | 7.95 | 26.68 |
| MIX85/15 | 8.07 | 53.26 | 2.51 | 4.59 | 3.72 | 18.89 |

It can be seen that the mix is very good in terms of beneficial tea solids content and compares favourably.

### Colour

Various streams were analysed for their colour and haze levels at room temperature (20°C) using a HunterLab Colorquest^{™} XE operating with the following conditions: Transmission mode, CIE color space, C illuminant, 2° Observer angle and 50 mm pathlength cell.

| **Sample** | **Conc.** | **L*** | **a*** | **b*** | **Haze** |
|---|---|---|---|---|---|
| | **(g/l)** | | | | |
| Light Decream | 1.2 | 69.99 | 14.48 | 78.19 | 2.88 |
| Cream/Permeate | 1.2 | 45.06 | 37.69 | 75.08 | 2.29 |
| MIX85/15 | 1.2 | 65.77 | 19.26 | 81.95 | 3.1 |

It can be seen that adding back some ultrafiltered cream into the decreamed fraction gives better colour attributes (i.e. darkness and redness) without compromising haze.

### Example 2

This example demonstrates advantages of a process employing ultrafiltration compared with a process similar to that disclosed in EP 0 198 209 A2, which employs centrifugation.

### Sample A

Pre-made hot-water soluble tea extract was dissolved in water at 95°C at a tea solids content of 10 wt%. This was centrifuged at 30°C to provide a cream fraction and a decream fraction. The resultant decream fraction was then freeze dried to yield sample A.

### Sample B

Pre-made hot-water soluble tea extract was dissolved in water at 95°C at a tea solids content of 10 wt%. This was centrifuged at 30°C to provide a cream fraction and a decream fraction. The resultant cream fraction was solubilised in water at 95°C before being cooled to 30°C and centrifuged to provide a second cream fraction and a second decream fraction. The second decream fraction was then freeze dried to yield sample B.

### Sample C

Pre-made hot-water soluble tea extract was dissolved in water at 95°C at a tea solids content of 10 wt%. This was centrifuged at 30°C to provide a cream fraction and a decream fraction. The resultant cream fraction was solubilised in water at 95°C before being cooled to 45°C and passed through an ultrafiltration membrane at a temperature of 45°C. The ultrafilter had a rating of 100 kDaltons. The resulting permeate was then freeze dried to yield sample C.

### Colour

Samples A, B and C were each dissolved in boiling water to ensure all solid material was dissolved entirely, then diluted down to 1.4 g l⁻¹ using room temperature (∼20°C) water. Each sample was then stored at 4°C for 7 days and then analysed for colour and haze. Colour values were obtained using a Minolta^{™} CT-310 (C illuminant, L*a*b* color space, 1 cm pathlength) and haze values were obtained using a HACH^{™} 2100P turbidimeter (autorange, ∼2 cm diameter cell).

| **Sample** | **Conc.** | **L*** | **a*** | **Haze** |
|---|---|---|---|---|
| | **(g/l)** | | | |
| A (Primary Decream) | 1.4 | 89.13 | 00.07 | 14.4 |
| B (Second Decream) | 1.4 | 68.87 | 13.93 | 42.2 |
| C (Permeate) | 1.4 | 80.58 | 7.20 | 0.65 |

It can be seen that the use of ultrafiltration (Sample C) has greatly reduced the haze value compared with centrifugation (Sample B), whilst also giving better colour attributes.

## Claims

1. A process for making a cold water soluble tea product comprising the steps of extracting tea material with water to give a tea extract, deleafing the tea extract, concentrating the deleafed tea extract, cooling the extract, decreaming the concentrated tea extract to provide a cream fraction and a decreamed fraction, solubilising the cream fraction in water and then subjecting the solubilised cream fraction to an ultrafiltration step so as to produce a permeate and a retentate and recovering the permeate.

2. A process as claimed in claim 1 which does not involve the addition of any chemical not obtained from tea.

3. A process as claimed in any preceding claim, wherein the permeate is recombined with the decreamed fraction.

4. A process as claimed in any preceding claim, wherein the retentate is further resolubilised and passed through a filtration step to produce a second permeate, which is recovered.

5. A process as claimed in any preceding claim, wherein the ultrafilter used in the ultrafiltration step has an average molecular weight exclusion point of at least 5000 Daltons.

6. A cold water soluble tea product obtainable by the process of any one of the preceding claims.

## Patentansprüche

1. Verfahren zur Herstellung eines in kaltem Wasser löslichen Teeprodukts, umfassend die Schritte Extrahieren von Teematerial mit Wasser unter Erhalt eines Teeextrakts, Befreien des Teeextrakts von Blättern, Konzentrieren des von Blättern befreiten Teeextrakts, Kühlen des Teeextrakts, Entcremen des konzentrierten Teeextrakts unter Bereitstellung einer Cremefraktion und einer entcremten Fraktion, Solubilisieren der Cremefraktion in Wasser und dann Unterwerfen der solubilisierten Cremefraktion einem Ultrafiltrationsschritt, um so ein Permeat und ein Retentat zu produzieren, und Isolieren des Permeats.

2. Verfahren nach Anspruch 1, welches keine Zugabe einer Chemikalie, die nicht aus Tee erhalten wurde, involviert.

3. Verfahren, wie es in einem vorangehenden Anspruch beansprucht wird, wobei das Permeat wieder mit der entcremten Fraktion kombiniert wird.

4. Verfahren, wie es in einem vorangehenden Anspruch beansprucht wird, wobei das Retentat außerdem resolubilisiert wird und durch einen Filtrationsschritt geführt wird, um ein zweites Permeat zu produzieren, welches isoliert wird.

5. Verfahren, wie es in einem vorangehenden Anspruch beansprucht wird, wobei der Ultrafilter, der im Ultrafiltrationsschritt verwendet wird, einen durchschnittlichen Molekulargewichts-Ausschlusspunkt von wenigstens 5000 Dalton hat.

6. In kaltem Wasser lösliches Teeprodukt, welches durch das Verfahren nach einem der vorangehenden Ansprüche erhältlich ist.

## Revendications

1. Procédé de préparation d'un produit de thé soluble dans l'eau froide comprenant les étapes consistant à extraire la substance de thé avec de l'eau pour donner un extrait de thé, ôter les feuilles de l'extrait de thé, concentrer l'extrait de thé dépourvu de feuilles, refroidir l'extrait, écrémer l'extrait de thé concentré pour donner une fraction de crème et une fraction écrémée, solubiliser la fraction de crème dans l'eau et ensuite soumettre la fraction de crème solubilisée à une étape d'ultrafiltration de sorte à produire un perméat et un rétentat et récupérer le perméat.

2. Procédé selon la revendication 1 qui ne comprend pas l'ajout d'une quelconque substance chimique qui n'a pas été extraite du thé.

3. Procédé selon l'une quelconque des revendications précédentes, dans lequel le perméat est recombiné avec la fraction écrémée.

4. Procédé selon l'une quelconque des revendications précédentes, dans lequel le rétentat est en outre de nouveau solubilisé et traité en passant par une étape de filtration pour produire un second perméat qui est récupéré.

5. Procédé selon l'une quelconque des revendications précédentes, dans lequel l'ultrafiltre utilisé dans l'étape d'ultrafiltration possède un point d'exclusion de masse moléculaire moyen d'au moins 5000 Daltons.

6. Produit de thé soluble dans l'eau froide que l'on peut obtenir par le procédé de l'une quelconque des revendications précédentes.
